(19) Europäisches Patentamt
European Patent Office
Office européen des brevets

(11) EP 3 385 954 A1

(12) EUROPEAN PATENT APPLICATION
published in accordance with Art. 153(4) EPC

(43) Date of publication:
**10.10.2018 Bulletin 2018/41**

(21) Application number: **16872996.0**

(22) Date of filing: **07.12.2016**

(51) Int Cl.:
***G21F 9/12*** *(2006.01)* ***B01J 20/10*** *(2006.01)*
***B01J 20/28*** *(2006.01)*

(86) International application number:
**PCT/JP2016/086300**

(87) International publication number:
**WO 2017/099099 (15.06.2017 Gazette 2017/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.12.2015 JP 2015240941**

(71) Applicants:
- **Ebara Corporation**
  **Ohta-ku, Tokyo 144-8510 (JP)**
- **Nippon Chemical Industrial Co., Ltd.**
  **Tokyo 136-8515 (JP)**

(72) Inventors:
- **SAKUMA, Takashi**
  **Tokyo 144-8510 (JP)**
- **KOMATSU, Makoto**
  **Tokyo 144-8510 (JP)**
- **IZUMI, Takeshi**
  **Tokyo 144-8510 (JP)**
- **MIYABE, Shinsuke**
  **Tokyo 136-8515 (JP)**
- **KINOSE, Yutaka**
  **Tokyo 136-8515 (JP)**
- **KIKUCHI, Masahiro**
  **Tokyo 136-8515 (JP)**
- **SAKAMOTO, Takeshi**
  **Tokyo 136-8515 (JP)**

(74) Representative: **Carstens, Dirk Wilhelm**
**Wagner & Geyer**
**Gewürzmühlstraße 5**
**80538 München (DE)**

# (54) TREATMENT METHOD FOR RADIOACTIVE WASTE LIQUID COMPRISING RADIOACTIVE CESIUM AND RADIOACTIVE STRONTIUM

(57) The present invention provides a treatment method of radioactive waste water containing radioactive cesium and radioactive strontium, comprising passing the radioactive waste water containing radioactive cesium and radioactive strontium through an adsorption column packed with an adsorbent for cesium and strontium, to adsorb the radioactive cesium and radioactive strontium on the adsorbent, wherein the adsorbent for cesium and strontium comprises: at least one selected from crystalline silicotitanates represented by the general formulas: $Na_4Ti_4Si_3O_{16}\cdot nH_2O$, $(Na_xK_{(1-x)})_4Ti_4Si_3O_{16}\cdot mH_2O$ and $K_4Ti_4Si_3O_{16}\cdot lH_2O$ wherein x represents a number of more than 0 and less than 1, and n, m and l each represents a number of 0 to 8; and at least one selected from titanate salts represented by the general formulas: $Na_4Ti_9O_{20}\cdot qH_2O$, $(Na_yK_{(1-y)})_4Ti_9O_{20}\cdot rH_2O$ and $K_4Ti_9O_{20}\cdot tH_2O$ wherein y represents a number of more than 0 and less than 1, and q, r and t each represents a number of 0 to 10; wherein the adsorbent is a granular adsorbent having a grain size of 250 $\mu$m or more and 1200 $\mu$m or less, wherein the absorbent is packed to a height of 10 cm or more and 300 cm or less in the adsorption column, and wherein the radioactive waste water is passed through the adsorption column at a linear velocity (LV) of 1 m/h or more and 40 m/h or less and a space velocity (SV) of 200 $h^{-1}$ or less.

EP 3 385 954 A1

## Description

TECHNICAL FIELD

The present invention relates to a treatment method of radioactive waste water containing radioactive cesium and radioactive strontium, in particular, a treatment method of radioactive waste water for removing both elements, the radioactive cesium and the radioactive strontium contained in the waste water containing contaminating ions such as a Na ion, a Ca ion and/or a Mg ion, generated in a nuclear power plant.

BACKGROUND ART

The accident caused by the Great East Japan Earthquake on March 11, 2011, in the Fukushima Daiichi Nuclear Power Station, has generated a large amount of radioactive waste water containing radioactive iodine. The radioactive waste water includes: the contaminated water generated due to the cooling water poured into a reactor pressure vessel, a reactor containment vessel, and a spent fuel pool; the trench water accumulated in a trench; the subdrain water pumped up from a well called a subdrain in the periphery of a reactor building; groundwater; and seawater (hereinafter, referred to as "radioactive waste water"). Radioactive substances are removed from these radioactive waste waters by using a treatment apparatus called, for example, SARRY (Simplified Active Water Retrieve and Recovery System (a simple type contaminated water treatment system) cesium removing apparatus) or ALPS (a multi-nuclide removal apparatus), and the water thus treated is collected in a tank.

Examples of a substance capable of selectively adsorbing and removing radioactive cesium among radioactive substances include ferrocyanide compounds such as iron blue, mordenite being a type of zeolite, an aluminosilicate, and titanium silicate (CST). For example, in SARRY, in order to remove radioactive cesium, IE96 manufactured by UOP LLC, an aluminosilicate, and IE911 manufactured by UOP LLC, a CST are used. Examples of a substance capable of selectively adsorbing and removing radioactive strontium include natural zeolite, synthetic A-type and X-type zeolite, a titanate salt, and CST. For example, in ALPS, in order to remove radioactive strontium, an adsorbent, a titanate salt is used.

In "Contaminated Liquid Water Treatment for Fukushima Daiichi NPS (CLWT)" (NPL 1) published by Division of Nuclear Fuel Cycle and Environment in the Atomic Energy Society of Japan, the cesium and strontium adsorption performances of IE910 manufactured by UOP LLC, a powdery CST, and IE911 manufactured by UOP LLC, a beaded CST, have been reported that the powdery CST has a capability of adsorbing radioactive cesium and strontium, and the granular CST is high in the cesium adsorption performance but low in the strontium adsorption performance.

It has also been reported that a modified CST obtained by surface treating a titanium silicate compound by bringing a sodium hydroxide aqueous solution having a sodium hydroxide concentration within a range of 0.5 mol/L or more and 2.0 mol/L into contact with the titanium silicate compound achieves a cesium removal efficiency of 99% or more and a strontium removal efficiency of 95% or more (PTL 1).

The powdery CST can be used, for example, in a treatment method based on flocculation, but is not suitable for the treatment method by passing the water to be treated through a column packed with an adsorbent, adopted in SARRY and ALPS.

In order to improve the strontium adsorption performance of the granular CST, the treatments and the operations shown in PTL 1 and NPL 2 have been investigated, but such treatments and operations require large amounts of chemicals so as to lead to a cost increase.

Accordingly, there is demanded a treatment method of radioactive waste water, being high in the adsorption performances of both of cesium and strontium without performing cumbersome treatments and operations, and using a granular CST suitable for the treatment method of passing water through an adsorption column. On the other hand, CST is weak against heat, undergoes composition change when strongly heated, and the capabilities of adsorbing cesium and strontium are degraded. In a zeolite molded body, a binder such as a clay mineral is used, and the zeolite molded body is fired at 500 °C to 800°C to improve the strength of the molded body; however, the adsorption capability of CST is degraded by heating strongly as described above, and accordingly CST cannot be fired. Therefore, it has been necessary to form a granular CST without heating strongly.

It has also been reported that the sodium ions have a tendency to suppress the ion-exchange reaction between the radioactive cesium and CST (NPL 2), and thus there is a problem that the removal performance of the radioactive cesium and the radioactive strontium from high-concentration seawater is degraded.

For the purpose of enhancing the adsorption performance of cesium and strontium from seawater containing sodium ions, the present inventors have proposed an adsorbent for cesium and strontium including: at least one selected from crystalline silicotitanates represented by the general formulas: $Na_4Ti_4Si_3O_{16}\cdot nH_2O$, $(Na_xK_{(1-x)})_4Ti_4Si_3O_{16}\cdot nH_2O$ and $K_4Ti_4Si_3O_{16}\cdot nH_2O$ wherein x represents a number of more than 0 and less than 1, and n represents a number of 0 to 8; and at least one selected from titanate salts represented by the general formulas: $Na_4Ti_9O_{20}\cdot mH_2O$, $(Na_yK_{(1-y)})_4Ti_9O_{20}\cdot mH_2O$ and $K_4Ti_9O_{20}\cdot mH_2O$ wherein y represents a number of more than 0 and less than 1, and m represents a number of 0 to 10, as well as a method for producing the adsorbent (PTL 2).

CITATION LIST

PATENT LITERATURE

PTL 1: Japanese Patent No. 5285183
PTL 2: Japanese Patent No. 5696244

NON PATENT LITERATURE

NPL 1: "Contaminated Liquid Water Treatment for Fukushima Daiichi NPS (CLWT)" http://www.nuce-aesj.org/projects:clwt:start
NPL 2: JAEA-Research 2011-037

SUMMARY OF INVENTION

TECHNICAL PROBLEM

An object of the present invention is to provide a treatment method of radioactive waste water, capable of removing both of radioactive cesium and radioactive strontium with a high removal efficiency and simply, by a method of passing water to be treated through a column packed with an adsorbent.

SOLUTION TO PROBLEM

As a result of a diligent study in order to solve the above-described problem, the present inventors have found that both of radioactive cesium and radioactive strontium can be removed simply and efficiently by passing radioactive waste water through an adsorption column packed with a specific adsorbent under a specific water passing conditions, and have completed the present invention.

The present invention includes the following aspects.

[1] A treatment method of radioactive waste water containing radioactive cesium and radioactive strontium, comprising passing the radioactive waste water containing radioactive cesium and radioactive strontium through an adsorption column packed with an adsorbent for cesium and strontium, to adsorb the radioactive cesium and radioactive strontium on the adsorbent, wherein the adsorbent for cesium and strontium comprises: at least one selected from crystalline silicotitanates represented by the general formulas: $Na_4Ti_4Si_3O_{16}\cdot nH_2O$, $(Na_xK_{(1-x)})_4Ti_4Si_3O_{16}\cdot mH_2O$ and $K_4Ti_4Si_3O_{16}\cdot lH_2O$ wherein x represents a number of more than 0 and less than 1, and n, m and 1 each represents a number of 0 to 8; and at least one selected from titanate salts represented by the general formulas: $Na_4Ti_9O_{20}\cdot qH_2O$, $(Na_yK_{(1-y)})_4Ti_9O_{20}\cdot rH_2O$ and $K_4Ti_9O_{20}\cdot tH_2O$ wherein y represents a number of more than 0 and less than 1, and q, r and t each represents a number of 0 to 10; wherein the adsorbent is a granular adsorbent having a grain size of 250 $\mu$m or more and 1200 $\mu$m or less, wherein the absorbent is packed to a height of 10 cm or more and 300 cm or less in the adsorption column, and wherein the radioactive waste water is passed through the adsorption column at a linear velocity (LV) of 1 m/h or more and 40 m/h or less and a space velocity (SV) of 200 $h^{-1}$ or less.

[2] The treatment method according to [1], wherein the radioactive waste water is waste water containing a Na ion, a Ca ion and/or a Mg ion.

[3] The treatment method according to [1] or [2], wherein when the adsorbent is subjected to an X-ray diffraction measurement using Cu-Ka as an X-ray source within a diffraction angle (2$\theta$) of 5° to 80°, one or more peaks of the crystalline silicotitanate are observed and one or more peaks of the titanate salt are observed, and the ratio of the height of the main peak of the titanate salt to the height of the main peak of the crystalline silicotitanate is 5% or more and 70% or less.

[4] The treatment method according to any one of [1] to [3], wherein when the adsorbent is subjected to an X-ray diffraction measurement using Cu-Ka as an X-ray source within a diffraction angle (2$\theta$) of 5° to 80°, the main peak of the titanate salt is observed at a diffraction angle (2$\theta$) of 8° or more and 10° or less.

## ADVANTAGEOUS EFFECTS OF INVENTION

According to the present invention, both of radioactive cesium and radioactive strontium can be removed with a high removal efficiency and simply by a treatment method of passing water to be treated through an adsorption column packed with an adsorbent.

## BRIEF DESCRIPTION OF DRAWINGS

Fig. 1 shows the X-ray diffraction spectrum of the adsorbent produced in Production Example 1.
Fig. 2 is a graph showing the cesium adsorption removal performance in Example 3.
Fig. 3 is a graph showing the strontium adsorption removal performance in Example 3.
Fig. 4 is a graph showing the cesium adsorption removal performance in Example 4.
Fig. 5 is a graph showing the strontium adsorption removal performance in Example 4.
Fig. 6 is a graph showing the cesium adsorption removal performance in Example 7.
Fig. 7 is a graph showing the strontium adsorption removal performance in Example 7.

## DESCRIPTION OF EMBODIMENTS

The present invention relates to a treatment method of radioactive waste water containing radioactive cesium and radioactive strontium, comprising passing the radioactive waste water containing radioactive cesium and radioactive strontium through an adsorption column packed with an adsorbent for cesium and strontium, to adsorb the radioactive cesium and radioactive strontium on the adsorbent, wherein the adsorbent for cesium and strontium comprises: at least one selected from crystalline silicotitanates represented by the general formulas: $Na_4Ti_4Si_3O_{16}\cdot nH_2O$, $(Na_xK_{(1-x)})_4Ti_4Si_3O_{16}\cdot mH_2O$ and $K_4Ti_4Si_3O_{16}\cdot lH_2O$ wherein x represents a number of more than 0 and less than 1, and n, m and l each represents a number of 0 to 8; and at least one selected from titanate salts represented by the general formulas: $Na_4Ti_9O_{20}\cdot qH_2O$, $(Na_yK_{(1-y)})_4Ti_9O_{20}\cdot rH_2O$ and $K_4Ti_9O_{20}\cdot tH_2O$ wherein y represents a number of more than 0 and less than 1, and q, r and t each represents a number of 0 to 10; wherein the adsorbent is a granular form having a grain size of 250 μm or more and 1200 μm or less, wherein the absorbent is packed to a height of 10 cm or more and 300 cm or less in the adsorption column, and wherein the radioactive waste water is passed through the adsorption column at a linear velocity (LV) of 1 m/h or more and 40 m/h or less and a space velocity (SV) of 200 $h^{-1}$ or less.

The adsorbent used in the treatment method of the present invention is a granular adsorbent having a grain size of 250 μm or more and 1200 μm or less, preferably 300 μm or more and 800 μm or less, and more preferably 300 μm or more and 600 μm or less, and may be prepared by a production method comprising conducting hydrothermal reaction at 300°C or lower and drying at 200°C or lower, as disclosed in Japanese Patent No. 5696244. The granular adsorbent of the present invention has a finer grain size and a higher adsorption rate as compared with commercially available common adsorbents (for example, zeolite-based adsorbents are pellets having a grain size of approximately 1.5 mm). On the other hand, when a powdery adsorbent is packed within the adsorption column, and water is passed through the adsorption column, the powdery adsorbent flows out the column. Thus, it is preferred that the granular adsorbent used in the present invention has a predetermined grain size. The granular adsorbent may be prepared by subjecting a mixed gel of a hydrous crystalline silicotitanate and a titanate salt to known granulation methods such as stirring mixing granulation, tumbling granulation, extrusion granulation, crushing granulation, fluidized bed granulation, spray dry granulation, compression granulation, and melt granulation. The granulation methods may be performed with or without known binders such as polyvinyl alcohol, polyethylene oxide, hydroxyethyl cellulose, hydroxypropyl cellulose, hydroxypropyl methyl cellulose, hydroxyethyl methyl cellulose, carboxymethyl cellulose, hydroxypropyl methyl cellulose, methyl cellulose, ethyl cellulose, starch, corn starch, syrup, lactose, gelatin, dextrin, gum arabic, alginic acid, polyacrylic acid, glycerin, polyethylene glycol, polyvinylpyrrolidone, and alumina. The granular adsorbent granulated without using a binder is preferable in the treatment method of the present invention using the adsorbent packed within the adsorption column, since the adsorbent quantity per unit volume is increased, and thus the treatment amount per unit volume of the same adsorption column is increased. Alternatively, the granular adsorbent having a grain size falling within a predetermined range can be obtained by drying the mixed gel of the hydrous crystalline silicotitanate and titanate salt, crushing the mixture into a granular form and classifying the granule with a sieve.

The granular adsorbent having a grain size falling within the above-described predetermined range used in the present invention preferably has a strength of 0.1 N or more in a wet condition, and does not collapse under the water pressure (in general, 0.1 MPa to 1.0 MPa) applied by passing the radioactive waste water to be treated for a long period of time.

In the treatment method of the present invention, the granular adsorbent is packed within an adsorption column so as for the layer height to be 10 cm or more and 300 cm or less, preferably 20 cm or more and 250 cm or less, and more preferably 50 cm or more and 200 cm or less. In the case where the layer height is less than 10 cm, the adsorbent layer cannot be packed uniformly when the adsorbent is packed in the adsorption column, thus the waste water is not uniformly passed through the adsorbent layer, and consequently the treated water quality is degraded. Increasing the layer height is preferable since an appropriate pressure difference of passing water can be achieved, the treated water quality is stabilized, and the total amount of the treated water is increased; however, when the layer height exceeds 300 cm, the pressure difference of passing water becomes too large.

The radioactive waste water containing radioactive cesium and radioactive strontium are passed through the adsorption column packed with the adsorbent, at a linear velocity (LV) of 1 m/h or more and 40 m/h or less, preferably 5 m/h or more and 30 m/h or less, more preferably 10 m/h or more and 20 m/h or less, and at a space velocity (SV) of 200 $h^{-1}$ or less, preferably 100 $h^{-1}$ or less, more preferably 50 $h^{-1}$ or less, and preferably 5 $h^{-1}$ or more, more preferably 10 $h^{-1}$ or more. When the linear velocity (LV) of water exceeds 40 m/h, the pressure difference of passing water becomes large, and when the linear velocity (LV) of water is less than 1 m/h, the quantity of water to be treated is small. Even at the space velocity (SV) used in common waste water treatment of 20 $h^{-1}$ or less, in particular, approximately 10 $h^{-1}$, the effect of the adsorbent of the present invention can be achieved; however, a waste water treatment using a common adsorbent cannot achieve a stable treated water quality, and cannot achieve a removal effect. In the present invention, the linear velocity (LV) and the space velocity (SV) can be increased without making the size of the adsorption column larger.

The linear velocity (LV) is the value obtained by dividing the water quantity ($m^3$/h) passed through the adsorption column by the cross-sectional area ($m^2$) of the adsorption column. The space velocity (SV) is the value obtained by dividing the water quantity ($m^3$/h) passed through the adsorption column by the volume ($m^3$) of the adsorbent packed in the adsorption column.

The treatment method of the present invention is suitable for the decontamination of waste water containing a Na ion, a Ca ion and/or a Mg ion.

## EXAMPLES

Hereinafter, the present invention is described specifically by way of Examples and Comparative Examples, but the present invention is not limited to these Examples. The analyses of the various components and the various adsorbents were performed using the apparatuses under the conditions described below.

<X-Ray Diffraction>

The D8 AdvanceS manufactured by Bruker Corporation was used. Cu-Ka was used as an X-ray source. The measurement conditions were such that the tube voltage was 40 kV, the tube current was 40 mA, and the scanning speed was 0.1°/sec.

<Cesium Concentration and Strontium Concentration>

Quantitative analysis of Cesium 133 and strontium 88 was performed by using an inductively coupled plasma mass spectrometer (ICP-MS, Model: Agilent 7700x) manufactured by Agilent Technologies, Inc. The sample was diluted by a factor of 1000 with diluted nitric acid, and analyzed as a 0.1% nitric acid matrix. The standard samples used were as follows: the aqueous solutions containing 0.05 ppb, 0.5 ppb, 1.0 ppb, 5.0 ppb, and 10.0 ppb of strontium, respectively; and the aqueous solutions containing 0.005 ppb, 0.05 ppb, 0.1 ppb, 0.5 ppb and 1.0 ppb of cesium, respectively.

[Production Example 1]

A mixed aqueous solution was obtained by mixing and stirring 90 g of sodium silicate No. 3 (manufactured by Nippon Chemical Industrial Co., Ltd. [$SiO_2$: 28.96%, $Na_2O$: 9.37%, $H_2O$: 61.67%, $SiO_2/Na_2O$=3.1]), 667.49 g of a caustic soda aqueous solution (industrial 25% sodium hydroxide [NaOH: 25%, $H_2O$: 75%]) and 84.38 g of pure water. To the obtained mixed aqueous solution, 443.90 g of a titanium tetrachloride aqueous solution (36.48% aqueous solution, manufactured by OSAKA Titanium Technologies Co., Ltd.) was continuously added with a Perista pump over 1 hour and 20 minutes to produce a mixed gel. The obtained mixed gel was allowed to stand still for aging over 1 hour at room temperature after the addition of the titanium tetrachloride aqueous solution. At this time, the molar ratio between Ti and Si in the mixed gel was Ti:Si=2:1. In the mixed gel, the $SiO_2$ concentration was 2%, $TiO_2$ concentration was 5.3%, and the sodium concentration in terms of $Na_2O$ was 3.22%.

The obtained mixed gel was placed in an autoclave, heated to 170°C over 1 hour, and reacted for 24 hours at this temperature while stirring. The slurry thus obtained was filtered, washed, and dried to yield an adsorbent (a mixture of crystalline silicotitanate and a titanate salt). The X-ray diffraction chart (after baseline correction) of the yield adsorbent is shown in Fig. 1. As shown in Fig. 1, in the X-ray diffraction chart, the main peak (M.P.) (originating from $Na_4Ti_4Si_3O_{16}\cdot 6H_2O$) of the crystalline silicotitanate was detected in the range of 2θ=10° to 13°, and the main peak (originating from $Na_4Ti_9O_{20}\cdot 5$ to $7H_2O$) of sodium titanate, was also detected in the range of 2θ=8° to 10°. On the basis of the X-ray diffraction chart after correction shown in Fig. 1, the ratio (%) of the height of the main peak of sodium titanate to the height of the main peak of the crystalline silicotitanate was determined.

The molar ratio between the crystalline silicotitanate and sodium titanate was determined by the following method.

(a) The adsorbent is placed in an appropriate vessel (such as an aluminum ring), the vessel is sandwiched by a pair of dice, and the adsorbent is pelletized by applying a pressure of 10 MPa by press machine to obtain a measurement sample. The sample was subjected to a measurement of all the elements by using a fluorescence X-ray spectrometer (apparatus name: ZSX100e, tube: Rh (4kW), atmosphere: vacuum, analysis window: Be (30 μm), measurement mode: SQX analysis (EZ scan), measurement diameter: 30 mmϕ, manufactured by Rigaku Corporation). The contents (% by mass) of Si02 and $TiO_2$ in the adsorbent are obtained by calculating by the SQX method, a semi-quantitative analysis method.

(b) The determined contents of $SiO_2$ and $TiO_2$ (% by mass) are divided by the respective molecular weights, and thus the numbers of moles of $SiO_2$ and $TiO_2$ in 100 g of the adsorbent are obtained.

(c) One-third of the number of moles of $SiO_2$ determined as described above is assumed as the number of moles of the crystalline silicotitanate ($Na_4Ti_4Si_3O_{16}\cdot nH_2O$) in the adsorbent. In addition, the number of moles of the Ti atom in 1 mole of the crystalline silicotitanate is 4, and thus, the number of moles of the titanate salt in the adsorbent is determined by using the following formula (1).

[Formula 1]

(Number of moles of titanate salt in adsorbent)

= (number of moles of $TiO_2$ contained in titanate salt in adsorbent) / 9

= [(number of moles of $TiO_2$ in adsorbent) - (number of moles of $SiO_2$ in adsorbent) × (4/3)] / 9 (1)

(d) The molar ratio is obtained from the obtained number of moles of the crystalline silicotitanate and the obtained number of moles of the titanate salt.

The composition determined from the X-ray diffraction structure, and the molar ratio between the crystalline silicotitanate and sodium titanate determined by the above-described method are shown in Table 1.

[Table 1]

| | |
|---|---|
| Ti : Si (Molar ratio) | 2 : 1 |
| A: Concentration in terms of $SiO_2$ (% by mass) | 2.00 |
| B: Concentration in terms of $TiO_2$ (% by mass) | 5.30 |
| A+B (% by mass) | 7.30 |
| Concentration in terms of $Na_2O$ (% by mass) | 3.22 |
| X-ray diffraction structure | Main phases $Na_4Ti_4Si_3O_{16}\cdot 6H_2O$ and $Na_4Ti_9O_{20}\cdot 5$ to $7H_2O$ were detected. The other crystalline silicotitanate and $TiO_2$ were not able to be detected. |
| Crystalline silicotitanate : sodium titanate | |
| Main peak height ratio (%) | 100 : 38.5 |
| Molar ratio | 1 : 0.37 |

The mixed slurry of the crystalline silicotitanate and the titanate salt was placed in a cylindrical extruder equipped, at the distal end portion thereof, with a screen having a perfect circle equivalent diameter of 0.6 mm, and the slurry was extrusion molded. The hydrous molded body extruded from the screen was dried at 120°C for 1 day, under atmospheric pressure. The obtained dried product was lightly crushed, and then sieved with a sieve having an opening of 600 μm. The residue on the sieve was again crushed, and the whole amount of crushed residue was sieved with a sieve having an opening of 600 μm. Next, the whole amount of crushed residue having passed through the sieve having an opening of 600 μm was collected and sieved with a sieve having an opening of 300 μm, and the residue on the sieve was collected and was adopted as a sample.

[Production Example 2]

The powdery crystalline silicotitanate having passed through the sieve having an opening of 300 μm in Production Example 1 was subjected to a melt granulation method by using polyvinyl alcohol as a binder to form granules. The granules were sufficiently washed, and a sample having a grain size of 0.35 mm to 1.18 mm was obtained by using a sieve.

[Production Example 3]

The powdery crystalline silicotitanate having passed through the sieve having an opening of 300 μm in Production Example 1 was subjected to a melt granulation method by using alginic acid as a binder to form granules. The granules were sufficiently washed, and a sample having a grain size of 0.35 mm to 1.18 mm was obtained by using a sieve

[Production Example 4]

The powdery crystalline silicotitanate having passed through the sieve having an opening of 300 μm in Production Example 1 was extruded by using alumina as a binder to a columnar shape. The column was sieved to obtain a sample having a grain size of 0.30 mm to 0.60 mm.

[Example 1]

<Preparation of Simulated Contaminated Seawater 1>

By adopting the following procedures, simulated contaminated water containing non radiative cesium and strontium, simulating the contaminated water of Fukushima Daiichi Nuclear Power Station was prepared.

First, an aqueous solution was prepared so as to have a salt concentration of 3.0 % by mass by using a chemical for producing artificial seawater of Osaka Yakken Co., Ltd., MARINE ART SF-1 (sodium chloride: 22.1 g/L, magnesium chloride hexahydrate: 9.9 g/L, calcium chloride dihydrate: 1.5 g/L, anhydrous sodium sulfate: 3.9 g/L, potassium chloride: 0.61 g/L, sodium hydrogen carbonate: 0.19 g/L, potassium bromide: 96 mg/L, borax: 78 mg/L, anhydrous strontium chloride: 0.19 g/L, sodium fluoride: 3 mg/L, lithium chloride: 1 mg/L, potassium iodide: 81 μg/L, manganese chloride tetrahydrate: 0.6 μg/L, cobalt chloride hexahydrate: 2 μg/L, aluminum chloride hexahydrate: 8 μg/L, ferric chloride hexahydrate: 5 μg/L, sodium tungstate dihydrate: 2 μg/L, ammonium molybdate tetrahydrate: 18 μg/L). To the prepared aqueous solution, cesium chloride was added so as for the cesium concentration to be 1 mg/L, and thus the simulated contaminated seawater 1 having a cesium concentration of 1.0 mg /L was prepared. A fraction of the simulated contaminated seawater 1 was sampled, and analyzed with ICP-MS; consequently, the cesium concentration was found to be 1.07 mg/L, and the strontium concentration was found to be 6.39 mg/L.

A 100-ml Erlenmeyer flask was charged with 0.5 g of the adsorbent having a grain size of 300 μm or more and 600 μm or less, prepared in Production Example 1; 50 ml of the simulated contaminated seawater 1 was added in the flask and allowed to stand still for 24 hours; then a fraction of the simulated contaminated seawater 1 was sampled, and the cesium and strontium concentrations were measured; the cesium concentration was found to be 0.06 mg/L, and the strontium concentration was found to be 1.03 mg/L.

From the cesium and strontium concentrations before and after the treatment with the adsorbent the removal rates (%) of cesium and strontium were calculated. The results thus obtained are shown in Table 2.

[Table 2]

TABLE 2

| | Cs removal rate | Sr removal rate |
|---|---|---|
| 3% Simulated seawater | 95% | 84% |

[Example 2]

<Preparation of Simulated Contaminated Seawater 2>

By adopting the following procedures, simulated contaminated water containing non radiative cesium and strontium, simulating the contaminated water of Fukushima Daiichi Nuclear Power Station was prepared.

First, by using an ordinary salt (Nami Shio), an aqueous solution was prepared so as to have a salt concentration of 0.3 % by mass. To the prepared aqueous solution, cesium chloride and strontium chloride were added so as for the cesium concentration to be 1 mg/L and for the strontium concentration to be 10 mg/L, and thus the simulated contaminated seawater 2 having a cesium concentration of 1.0 mg /L and a strontium concentration of 10 mg/L was prepared. A fraction of the simulated contaminated seawater 2 was sampled, and analyzed with ICP-MS; consequently, the cesium concentration was found to be 1.08 mg/L, and the strontium concentration was found to be 9.74 mg/L.

A 100-ml Erlenmeyer flask was charged with 0.5 g of the adsorbent having a grain size of 300 μm to 600 μm, prepared in Production Example 1; 50 ml of the simulated contaminated seawater 2 was added in the flask and allowed to stand still for 24 hours; then a fraction of the simulated contaminated seawater 2 was sampled, and the cesium and strontium concentrations were measured; the cesium concentration was found to be 0.09 mg/L, and the strontium concentration was found to be 0.15 mg/L.

From the cesium and strontium concentrations before and after the treatment with the adsorbent the removal rates (%) of cesium and strontium were calculated. The results thus obtained are shown in Table 3.

[Table 3]

TABLE 3

| | Cs removal rate | Sr removal rate |
|---|---|---|
| 0.3% Simulated seawater | 92% | 98% |

[Example 3]

<Preparation of Simulated Contaminated Seawater 3>

By adopting the following procedures, simulated contaminated water containing non radiative cesium and strontium, simulating the contaminated water of Fukushima Daiichi Nuclear Power Station was prepared.

First, an aqueous solution was prepared so as to have a salt concentration of 0.17 % by mass by using a chemical for producing artificial seawater of Osaka Yakken Co., Ltd., MARINE ART SF-1. To the prepared aqueous solution, cesium chloride was added so as for the cesium concentration to be 1 mg/L, and thus the simulated contaminated seawater 3 having a cesium concentration of 1.0 mg /L was prepared. A fraction of the simulated contaminated seawater 3 was sampled, and analyzed with ICP-MS; consequently, the cesium concentration was found to be 0.81 mg/L to 1.26 mg/L, and the strontium concentration was found to be 0.26 mg/L to 0.42 mg/L.

A glass column having an inner diameter of 16 mm was packed with 20 ml of the adsorbent having a grain size of 300 μm to 600 μm, prepared in Production Example 1, so as for the layer height to be 10 cm; the simulated contaminated seawater 3 was passed through the column at a flow rate of 67 ml/min (linear velocity (LV): 20 m/h, space velocity (SV): 200 $h^{-1}$); and the outlet water was periodically sampled, and the cesium concentration and the strontium concentration were measured. The results of the analysis of the outlet water were such that the cesium concentration was 0.00 to 0.11 mg/L, and the strontium concentration was 0.09 to 0.26 mg/L.

The cesium removal performance is shown in Fig. 2, and the strontium removal performance is shown in Fig. 3. In each of Figs. 2 and 6, the horizontal axis is the B.V. representing the ratio of the volume of the simulated contaminated seawater passing through the column to the volume of the adsorbent; the vertical axis represents the value obtained by dividing the cesium or strontium concentration at the column outlet by the cesium or strontium concentration at the column inlet, respectively.

As can be seen from Fig. 2, even when the layer height was 10 cm and the space velocity (SV) was 200 $h^{-1}$, cesium was able to be removed by adsorption to an extent of nearly 100% for the B.V. up to approximately 13000.

As can be seen from Fig. 3, when the layer height of the adsorbent in the adsorption column was 10 cm, and the space velocity (SV) was 200 $h^{-1}$, the adsorption removal performance of strontium is lower as compared with the adsorption removal performance of cesium; however, for the B.V. up to approximately 15000, strontium was able to be removed to an extent of 50% to 60%.

[Example 4]

A glass column having an inner diameter of 16 mm was packed with 200 ml of the adsorbent having a grain size of 300 μm or more and 600 μm or less, prepared in Production Example 1, so as for the layer height to be 100 cm; the simulated contaminated seawater 4 (cesium concentration: 0.83 mg/L to 1.24 mg/L, strontium concentration: 0.24 mg/L to 0.30 mg/L) prepared in the same manner as the simulated contaminated seawater 3 was passed through the column at a flow rate of 67 ml/min (linear velocity (LV): 20 m/h, space velocity (SV): 20 $h^{-1}$); and the outlet water was periodically sampled, and the cesium concentration and the strontium concentration were measured. The results of the analysis of the outlet water were such that the cesium concentration was 0.00 mg/L to 0.01 mg/L, and the strontium concentration was 0.00 mg/L to 0.27 mg/L.

The cesium removal performance is shown in Fig. 4, and the strontium removal performance is shown in Fig. 5. In each of Figs. 4 and 8, the horizontal axis is the B.V. representing the ratio of the volume of the simulated contaminated seawater passing through the column to the volume of the adsorbent; the vertical axis represents the value obtained by dividing the cesium or strontium concentration at the column outlet by the cesium or strontium concentration at the column inlet, respectively.

As can be seen from Fig. 4, cesium was able to be removed by adsorption to an extent of nearly 100% for the B.V. up to approximately 13000. From a comparison of Fig. 4 with Fig. 2, it can be said that for the adsorption removal of cesium, the case of the layer height of 10 cm and the apace velocity (SV) of 200 $h^{-1}$ and the case of the layer height of 100 cm and the space velocity (SV) of 20 $h^{-1}$ are not different from each other with respect to the adsorption removal performance of cesium.

As can be seen from Fig. 5, strontium was able to be removed by adsorption to an extent of nearly 100% for the B.V. up to approximately 9000; when the B.V. exceeded 10000, the adsorption removal performance was steeply degraded; when the B.V. was approximately 13000, $C/C_0=1.0$ was reached and complete breakthrough occurred. As can be seen from a comparison of Fig. 5 with Fig. 3, by setting the layer height to be 100 cm and the space velocity (SV) to be 20 $h^{-1}$, the adsorption removal performance of strontium was remarkably improved within the range of B.V. up to approximately 9000.

Accordingly, it has been able to be verified that by increasing the layer height of the adsorbent and by decreasing the space velocity (SV), the adsorption removal performance of strontium is remarkably improved while the adsorption performance of cesium is being maintained.

[Example 5]

A glass column having an inner diameter of 16 mm was packed with 20 ml of the adsorbent having a grain size of 300 μm or more and 600 μm or less, prepared in Production Example 1, so as for the layer height to be 10 cm; the simulated contaminated seawater 5 (cesium concentration: 0.91 mg/L to 1.24 mg/L, strontium concentration: 0.24 mg/L to 0.48 mg/L) prepared in the same manner as the simulated contaminated seawater 3 was passed through the column at a flow rate of 6.5 ml/min to 67 ml/min (linear velocity (LV): 2 m/h and space velocity (SV): 20 $h^{-1}$ to linear velocity (LV): 20 m/h and space velocity (SV): 200 $h^{-1}$); and the outlet water was periodically sampled, and the cesium concentration and the strontium concentration were measured. The results of the analysis of the outlet water were such that the cesium concentration was 0.00 mg/L to 0.12 mg/L, and the strontium concentration was 0.00 mg/L to 0.34 mg/L.

In addition, a glass column having an inner diameter of 16 mm was packed with 40 ml of the adsorbent having a grain size of 300 μm or more and 600 μm or less, prepared in Production Example 1, so as for the layer height to be 20 cm; the simulated contaminated seawater 5 was passed through the column at a flow rate of 134 ml/min (linear velocity (LV): 40 m/h, space velocity (SV): 200 $h^{-1}$); and the outlet water was periodically sampled, and the cesium concentration and the strontium concentration were measured. The results of the analysis of the outlet water were such that the cesium concentration was 0.00 mg/L to 0.07 mg/L, and the strontium concentration was 0.11 mg/L to 0.32 mg/L.

A glass column having an inner diameter of 16 mm was packed with 200 ml of the adsorbent having a grain size of 300 μm or more and 600 μm or less, prepared in Production Example 1, so as for the layer height to be 100 cm; the simulated contaminated seawater 5 was passed through the column at a flow rate of 67 ml/min (linear velocity (LV): 20 m/h, space velocity (SV): 20 $h^{-1}$); and the outlet water was periodically sampled, and the cesium concentration and the strontium concentration were measured. The results of the analysis of the outlet water were such that the cesium concentration was 0.00 mg/L to 0.01 mg/L, and the strontium concentration was 0.00 mg/L to 0.31 mg/L.

As Comparative Examples, a glass column having an inner diameter of 16 mm was packed with 14 ml of the adsorbent having a grain size of 300 μm or more and 600 μm or less, prepared in Production Example 1, so as for the layer height to be 7 cm, and the simulated contaminated seawater 5 was passed through the column at a flow rate of 67 ml/min (linear velocity (LV): 20 m/h, space velocity (SV): 285 $h^{-1}$); a glass column having an inner diameter of 16 mm was packed with 20 ml of the adsorbent having a grain size of 300 μm or more and 600 μm or less, prepared in Production Example 1, so as for the layer height to be 10 cm, and the simulated contaminated seawater 5 was passed through the column at a flow rate of 134 ml/min (linear velocity (LV): 40 m/h, space velocity (SV): 400 $h^{-1}$); and the outlet water was periodically sampled, and the cesium concentration and the strontium concentration were measured. The results of the analysis of the outlet water were such that the cesium concentration was 0.00 mg/L to 0.76 mg/L, and the strontium concentration was 0.04 mg/L to 0.39 mg/L.

Among the results thus obtained, Table 4 shows the B.V. values for which the value (C/Co) obtained by dividing the column outlet concentration by the column inlet concentration was 0.1 for cesium and 1.0 for strontium. As can be seen from Table 4, as compared with the case where the space velocity (SV) was 200 $h^{-1}$ or less (20 $h^{-1}$ and 200 $h^{-1}$), when the space velocity (SV) exceeds 200 $h^{-1}$ (285 $h^{-1}$ and 400 $h^{-1}$), the B.V. value for which C/Co was 0.1 for cesium and 1.0 for strontium came to be low, and the removal performances of both cesium ion and strontium ion were verified to be degraded.

[Table 4]

TABLE 4

| Layer height cm | Linear velocity (LV) m/h | Space velocity (SV) $h^{-1}$ | B.V. (Cs) | B.V (Sr) |
|---|---|---|---|---|
| 10 | 2 | 20 | >15,000*) | >15,000*) |
| 10 | 5 | 50 | 19,000 | 19,000 |
| 10 | 10 | 100 | 15,000 | 18,000 |
| 10 | 20 | 200 | 18,000 | 19,000 |
| 20 | 40 | 200 | 15,000 | 15,000 |
| 100 | 20 | 20 | >17,000*) | 12,000 |
| 7 | 20 | 285 | 8,000 | 7,000 |
| 10 | 40 | 400 | 2,500 | 4,000 |
| *) Experiment was finished before C/Co became 0.1 for cesium and 1.0 for strontium. | | | | |

[Example 6]

A glass column having an inner diameter of 16 mm was packed with each of the adsorbents prepared in Production Examples 1, 2, and 3 so as for the layer height to be 10 cm; the simulated contaminated seawater 6 (the cesium concentration was 0.81 mg/L to 1.39 mg/L, and the strontium concentration was 0.27 mg/L to 0.40 mg/L) prepared in the same manner as the simulated contaminated seawater 3 was passed through the column at a flow rate of 67 ml/min (linear velocity (LV): 20 m/h, space velocity (SV): 200 $h^{-1}$); and the outlet water was periodically sampled, and the cesium concentration and the strontium concentration were measured. The results of the analysis of the outlet water were such that the cesium concentration was 0.00 mg/L to 0.11 mg/L, and the strontium concentration was 0.07 mg/L to 0.34 mg/L.

Among the results thus obtained, Table 5 shows the B.V. values divided by the net specific gravity (the specific gravity exclusive of the binder) of the mixture of crystalline silicotitanate and the titanate salt, wherein the B.V. values are associated with the ($C/C_0$) values of 0.1 for cesium and 1.0 for strontium, and the (C/Co) is the ratio of the column outlet concentration to the column inlet concentration. As can be seen from Table 5, as compared with Production Example 1 using no binder, even Production Examples 2 and 3, each using a binder, has been verified to have the cesium ion and strontium ion removal performances approximately equivalent to the removal performances concerned of Production Example 1.

[Table 5]

TABLE 5

| | Net specific gravity | B.V. (Cs)/ Specific gravity | B.V (Sr)/ Specific gravity |
|---|---|---|---|
| Production Example 1 | 0.85 | 21,000 | 22,000 |
| Production Example 2 | 0.32 | 19,000 | 25,000 |
| Production Example 3 | 0.60 | 17,000 | 20,000 |

[Example 7]

A glass column having an inner diameter of 16 mm was packed with each of the adsorbents prepared in Production Examples 2 and 4 so as for the layer height to be 10 cm; the simulated contaminated seawater 7 (the cesium concentration was 0.85 mg/L to 0.96 mg/L, and the strontium concentration was 0.17 mg/L to 0.38 mg/L) prepared in the same manner as the simulated contaminated seawater 3 was passed through the column at a flow rate of 6.5 ml/min (linear velocity (LV): 2 m/h, space velocity (SV): 20 $h^{-1}$); and the outlet water was periodically sampled, and the cesium concentration and the strontium concentration were measured. The results of the analysis of the outlet water were such that the cesium concentration was 0.00 mg/L to 0.02 mg/L, and the strontium concentration was 0.00 mg/L to 0.35 mg/L.

The cesium removal performance is shown in Fig. 6, and the strontium removal performance is shown in Fig. 7. In each of Figs. 6 and 10, the horizontal axis is the B.V. representing the ratio of the volume of the simulated contaminated seawater passing through the column to the volume of the adsorbent; the vertical axis represents the value (C/Co) obtained by dividing the cesium or strontium concentration at the column outlet by the cesium or strontium concentration at the column inlet, respectively.

As can be seen from Fig. 6, when the layer height was 10 cm and the space velocity (SV) was 20 $h^{-1}$, cesium was able to be removed by adsorption to an extent of nearly 100% for the B.V. up to approximately 9000.

As can be seen from Fig. 7, when the layer height was 10 cm and the space velocity (SV) was 20 $h^{-1}$, strontium was able to be removed by adsorption for the B.V. up to approximately 5000.

## Claims

1. A treatment method of radioactive waste water containing radioactive cesium and radioactive strontium, comprising passing the radioactive waste water containing radioactive cesium and radioactive strontium through an adsorption column packed with an adsorbent for cesium and strontium, to adsorb the radioactive cesium and radioactive strontium on the adsorbent for cesium and strontium,
wherein the adsorbent for cesium and strontium comprises:

   at least one selected from crystalline silicotitanates represented by the general formulas: $Na_4Ti_4Si_3O_{16}{\cdot}nH_2O$, $(Na_xK_{(1-x)})_4Ti_4Si_3O_{16}{\cdot}mH_2O$ and $K_4Ti_4Si_3O_{16}{\text -}lH_2O$ wherein x represents a number of more than 0 and less than 1, and n, m and l each represents a number of 0 to 8; and
   at least one selected from titanate salts represented by the general formulas: $Na_4Ti_9O_{20}{\cdot}qH_2O$, $(Na_yK_{(1-y)})_4Ti_9O_{20}{\cdot}rH_2O$ and $K_4Ti_9O_{20}{\cdot}tH_2O$ wherein y represents a number of more than 0 and less than 1, and q, r and t each represents a number of 0 to 10;

   wherein the adsorbent for cesium and strontium is a granular adsorbent having a grain size of 250 $\mu$m or more and 1200 $\mu$m or less,
   wherein the absorbent is packed to a height of 10 cm or more and 300 cm or less in the adsorption column, and
   wherein the radioactive waste water is passed through the adsorption column at a linear velocity (LV) of 1 m/h or more and 40 m/h or less and a space velocity (SV) of 200 $h^{-1}$ or less.

2. The treatment method according to claim 1, wherein the radioactive waste water is waste water containing a Na ion, a Ca ion and/or a Mg ion.

3. The treatment method according to claim 1 or 2, wherein when the adsorbent for cesium and strontium is subjected to an X-ray diffraction measurement using Cu-Ka as an X-ray source within a diffraction angle (2θ) of 5° to 80°, one or more peaks of the crystalline silicotitanate are observed and one or more peaks of the titanate salt are observed, and the ratio of the height of the main peak of the titanate salt to the height of the main peak of the crystalline silicotitanate is 5% or more and 70% or less.

**4.** The treatment method according to any one of claims 1 to 3, wherein when the adsorbent for cesium and strontium is subjected to an X-ray diffraction measurement using Cu-Ka as an X-ray source within a diffraction angle (2θ) of 5° to 80°, the main peak of the titanate salt is observed at a diffraction angle (2θ) of 8° or more and 10° or less.

Fig. 1

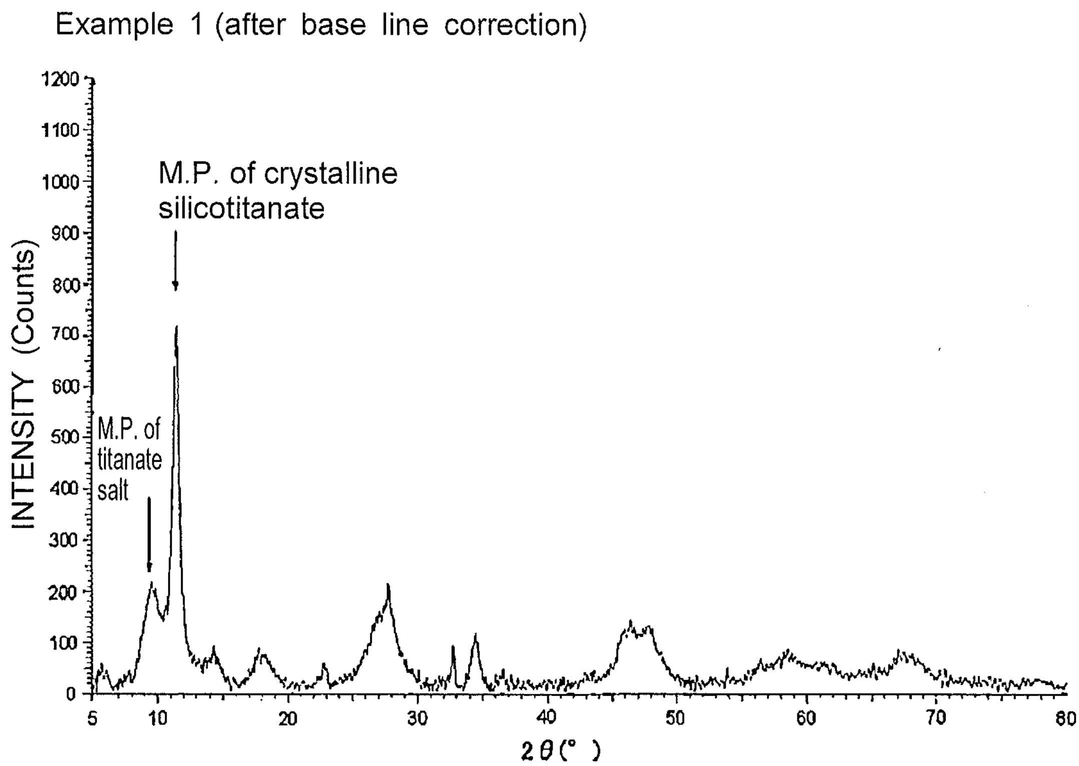
Example 1 (after base line correction)
M.P. of crystalline silicotitanate
M.P. of titanate salt
INTENSITY (Counts)
2θ(° )
0
100
200
300
400
500
600
700
800
900
1000
1100
1200
5
10
20
30
40
50
60
70
80

Fig. 2

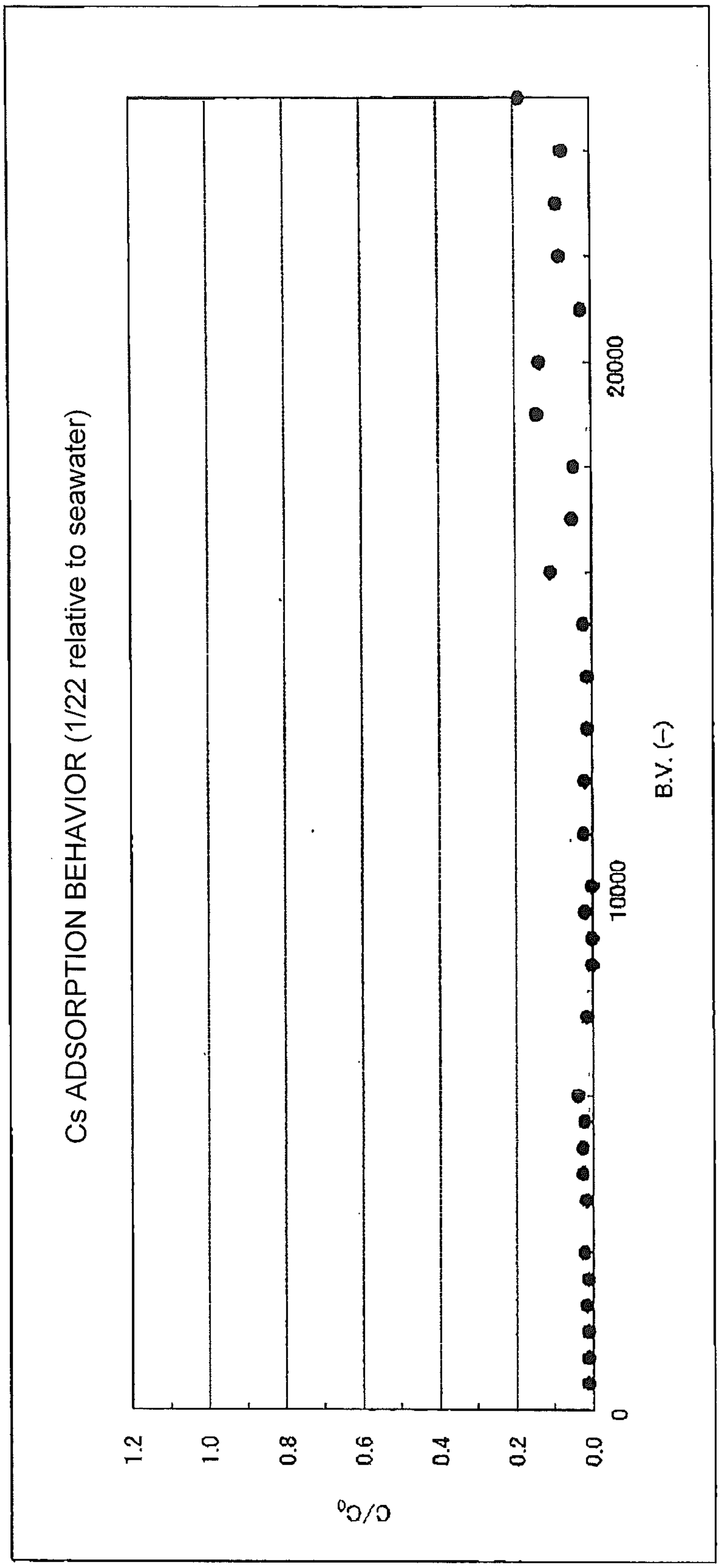
Cs ADSORPTION BEHAVIOR (1/22 relative to seawater)
C/C0
1.2
1.0
0.8
0.6
0.4
0.2
0.0
0
10000
20000
B.V. (-)

Fig. 3

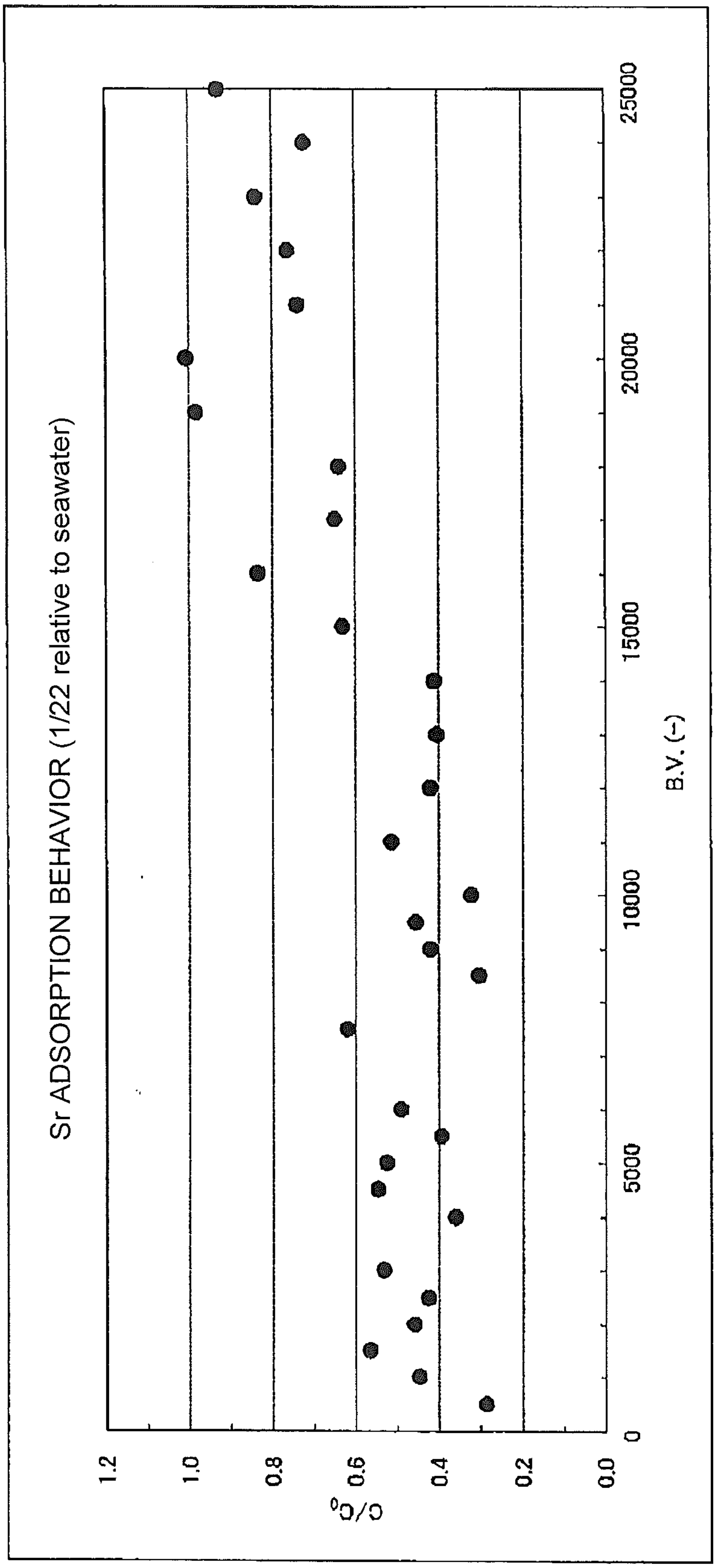
Sr ADSORPTION BEHAVIOR (1/22 relative to seawater)
$C/C_0$
1.2
1.0
0.8
0.6
0.4
0.2
0.0
0
5000
10000
15000
20000
25000
B.V. (-)

Fig. 4

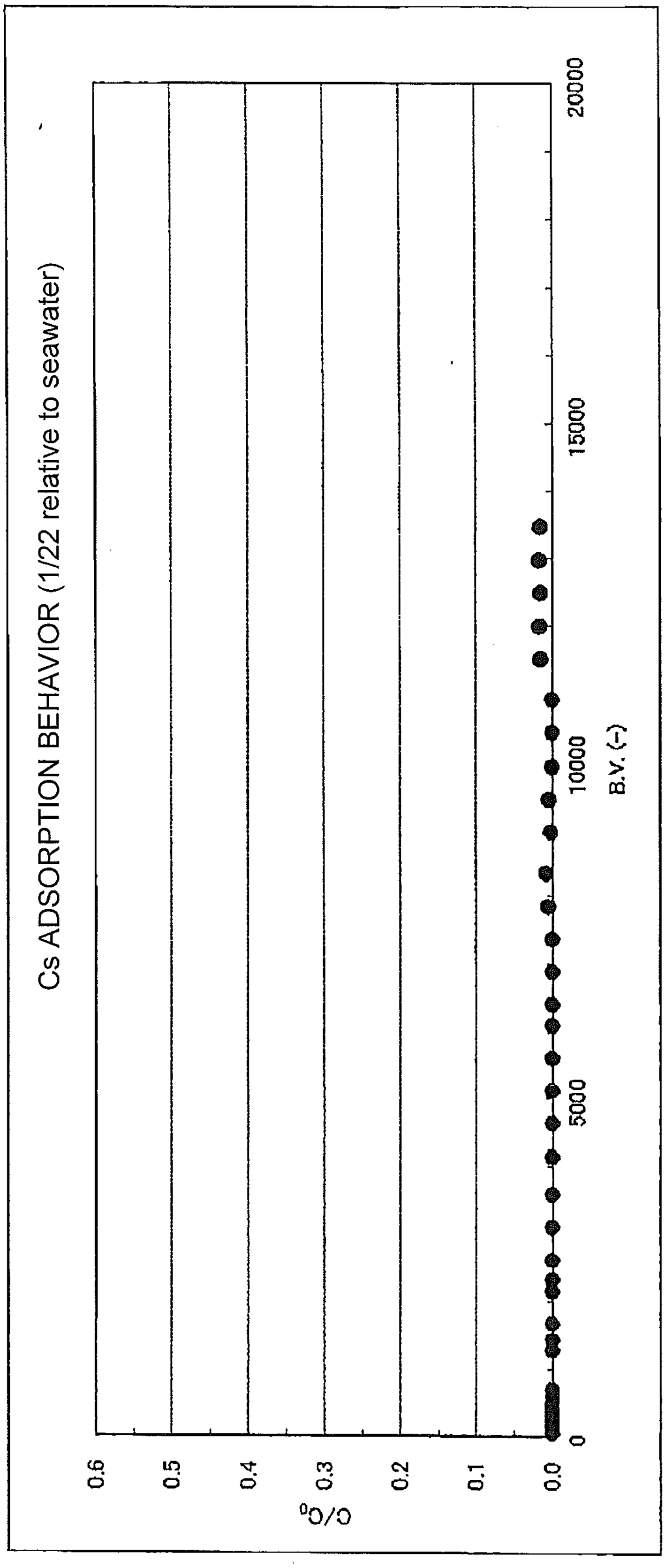
Cs ADSORPTION BEHAVIOR (1/22 relative to seawater)
C/C$_0$
0.6
0.5
0.4
0.3
0.2
0.1
0.0
0
5000
10000
15000
20000
B.V. (-)

Fig. 5

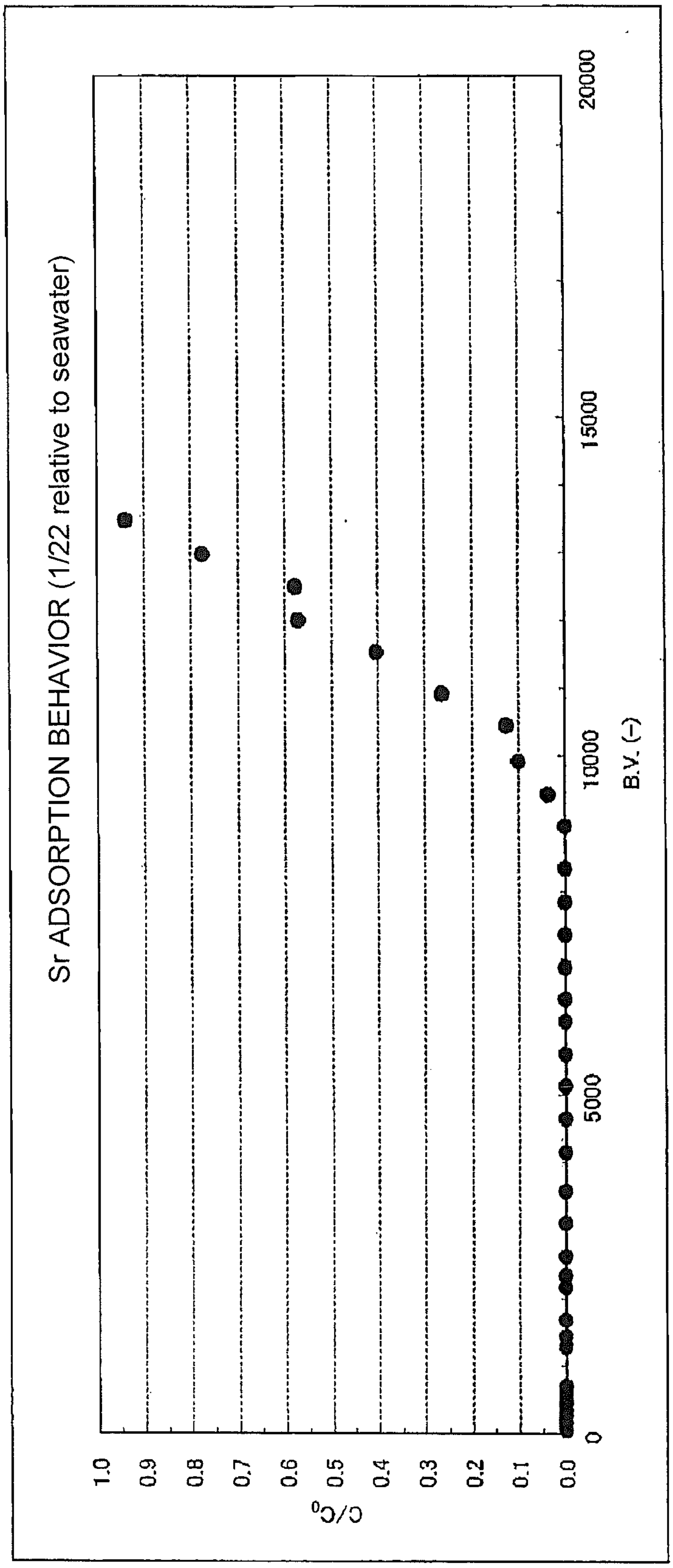
Sr ADSORPTION BEHAVIOR (1/22 relative to seawater)
C/C$_0$
1.0
0.9
0.8
0.7
0.6
0.5
0.4
0.3
0.2
0.1
0.0
0
5000
10000
15000
20000
B.V. (-)

Fig. 6

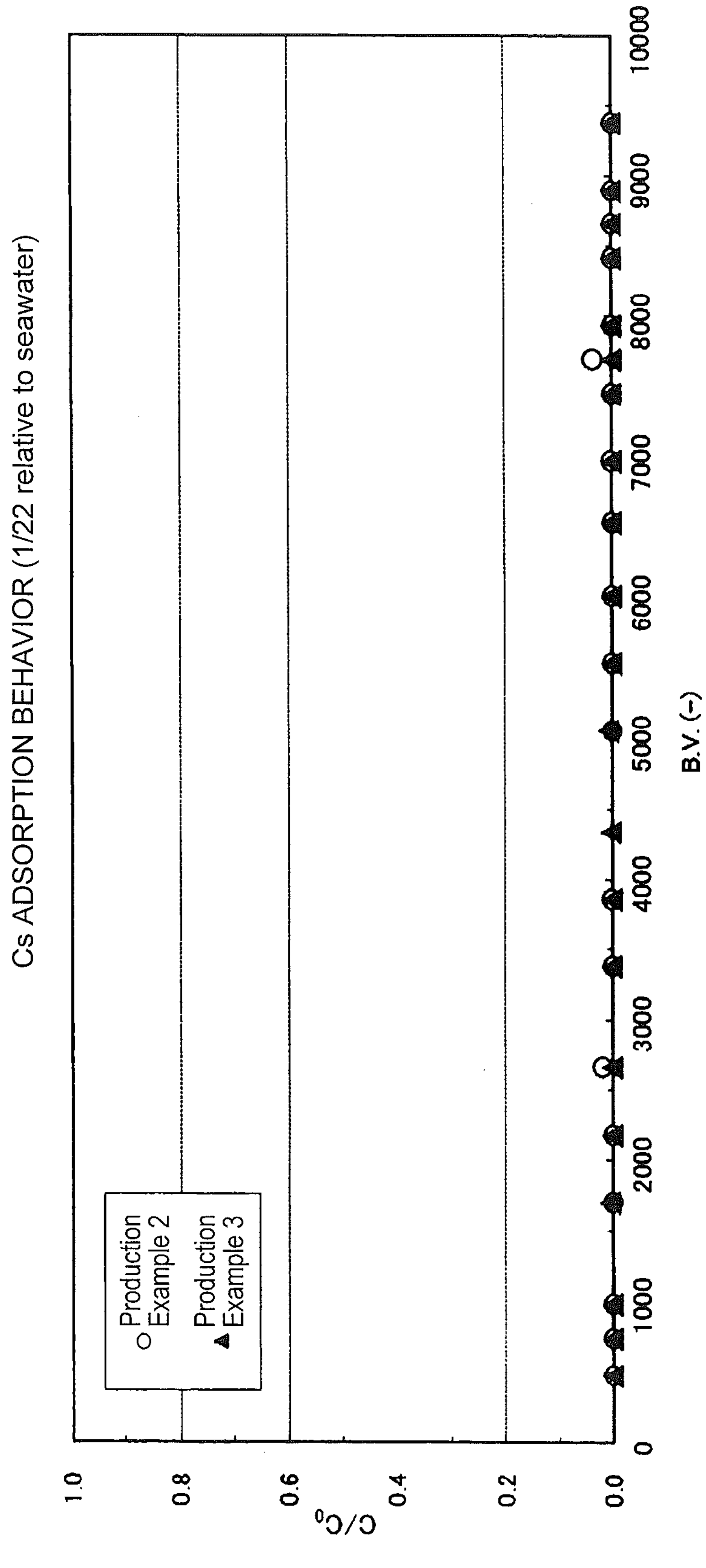
Cs ADSORPTION BEHAVIOR (1/22 relative to seawater)
C/C$_0$
1.0
0.8
0.6
0.4
0.2
0.0
0
1000
2000
3000
4000
5000
6000
7000
8000
9000
10000
B.V. (-)
Production Example 2
Production Example 3

Fig. 7

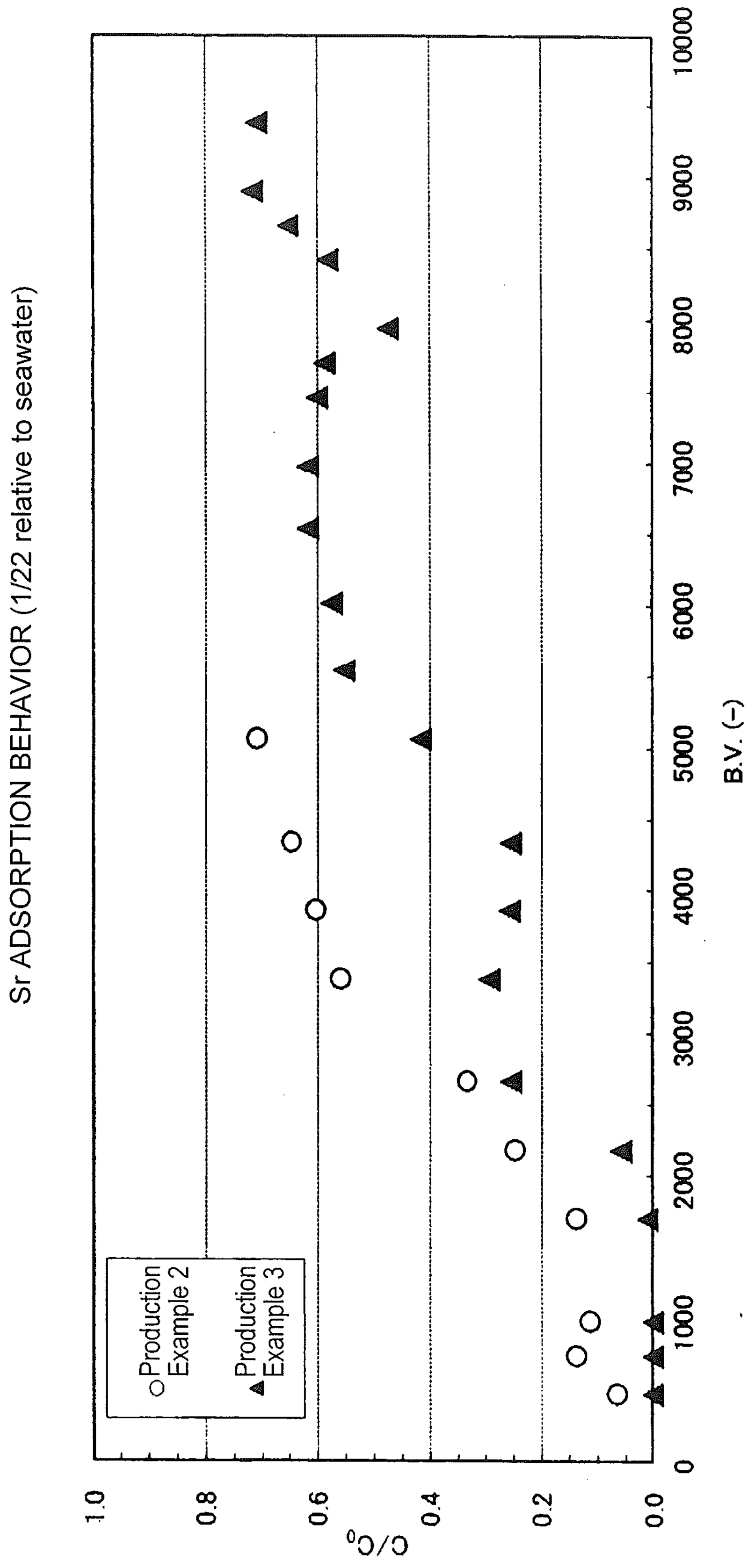
Sr ADSORPTION BEHAVIOR (1/22 relative to seawater)
C/C0
1.0
0.8
0.6
0.4
0.2
0.0
0
1000
2000
3000
4000
5000
6000
7000
8000
9000
10000
B.V. (-)
Production Example 2
Production Example 3

**INTERNATIONAL SEARCH REPORT**

International application No.
PCT/JP2016/086300

A. CLASSIFICATION OF SUBJECT MATTER
*G21F9/12*(2006.01)i, *B01J20/10*(2006.01)i, *B01J20/28*(2006.01)i

According to International Patent Classification (IPC) or to both national classification and IPC

B. FIELDS SEARCHED

Minimum documentation searched (classification system followed by classification symbols)
G21F9/12, B01J20/00-20/34, B01D15/00-15/42, C02F1/28, C02F1/58-1/64

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 5696244 B1 (The Nippon Chemical Industrial Co., Ltd.), 08 April 2015 (08.04.2015), claims 1 to 3; paragraphs [0001] to [0003], [0053], [0055], [0064] to [0088] & US 2016/0107140 A1 claims 20 to 22; paragraphs [0002] to [0005], [0068], [0070], [0081] to [0105] & WO 2015/146962 A1 & EP 3098817 A1 & CN 106062885 A & KR 10-2016-0138951 A | 1-4 |
| Y | JP 2015-42395 A (Kurita Water Industries Ltd.), 05 March 2015 (05.03.2015), paragraphs [0071] to [0077] (Family: none) | 1-4 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 February 2017 (17.02.17) | 07 March 2017 (07.03.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5285183 B
- JP 5696244 B